# EUROPEAN PATENT APPLICATION

(11) **EP 0 835 901 A2**
(43) Date of publication of application: **15.04.1998**
(21) Application number: 97307950.2
(22) Date of filing: 08.10.1997
(51) Int. Cl.: C08J 11/24, C08G 18/40

(54) **A method for preparation of recycled polyols and a method for manufacturing polyurethane foams**

(30) Priority: 08.10.1996 KR 9644613; 28.08.1997 KR 9741952
(71) Applicant: SAMSUNG ELECTRONICS CO., LTD., Suwon-city, Kyungki-do 441-373 (KR); Jeon, Jong Han, Samcheon-dong, Seo-ku, Taejon (KR)
(72) Inventor: Jeon, Jong Han, Seo-ku, Taejon (KR); Jeon, Jae Kyeong, Yongin-city, Kyungki-do (KR); Sung, Kyu Sik, Paldal-ku, Suwon-city, Kyungki-do (KR); Hong, Young Taek, Kwangsan-ku, Kwangjoo (KR)
(74) Representative: Sturt, Clifford Mark

(57) **Abstract**

A process for efficiently recycling polyurethane foam wastes to give recycled polyols as well as a preparation of polyurethane foam having good thermal insulation property and improved dimensional stability.

## Description

### BACKGROUND OF THE INVENTION

### 1. Field of the Invention

The present invention relates generally to a preparation of recycled polyols and a manufacturing process of polyurethane foams therefrom. More particularly, it relates to a preparation of recycled polyols by glycolysis of rigid polyurethane foam wastes, and a process for manufacturing polyurethane foams with improved thermal insulation property from the recycled polyols.

### 2. Description of the Related Arts

Polyurethanes are versatile plastics which are produced in large amounts. Particular importance is attached to rigid polyurethane foams (hereinafter abbreviated to 'PUR'). Their good heat insulation capacity means that they are frequently used for thermal insulation, for example in the construction industry or in the refrigeration industry. Recently, a large amount of PUR wastes are produced during the recycling of refrigerating apparatuses.

One problem encountered in the use of PUR is that its recycling is very difficult owing to their cross linking. Thus, PUR, which is a thermosetting polymer, cannot be recycled by melting. The decomposition by fire of PUR to generate waste heat also has problems that the poisonous and toxic gases are produced during the burning, which bring about a secondary pollution and are corrosive to the furnace apparatuses. Further, PUR is a high expandable material, requiring a voluminous appliances for its handling.

The conventional recycling processes of PUR wastes are as follows:

First, the mechanical recycling can be used, in which PUR wastes are pulverized or powdered and re-used as fillers for injection or extrusion mold articles, or as fillers for polyurethane adhesives. Alternatively, pulverized PUR wastes are compressed and used as rebonded foams (See for example, USP 5,451,376).

Second, the chemical recycling can be used, in which PUR wastes are decomposed by using solvents, and may include hydrolysis, glycolysis and aminolysis (See for example, USP 4,159,972).

Third is feedstock recycling such as pyrolysis, hydrogenation and gasification.

The final process is a energy recovery, for example a decomposition by fire to recover the waste heat, or rotary kiln method.

Among these conventional processes, the first process has a drawback that the molded parts having the pulverized PUR incorporated therein suffer from a severe deterioration of their mechanical properties since PUR is a foam and thermosetting polymer and therefore undergoes no interaction in the interface between powdered PUR and the matrix resin for the molded parts. And, the third process is not employed currently due to the generation of poisonous gases.

The second chemical recycling processes are currently employed and has been actively developed. Among others, the hydrolysis process is disadvantageous in the economic viewpoint since the reaction conversion is very low. On the other hand, the glycolysis process, in which PUR is depolymerized by glycols, is advantageous that recycled polyols are generated from the glycolysis of PUR wastes and can be re-used to prepare PUR.

It has also known to break down polyurethane by chemical processes and to re-use these breakdown products for the preparation of polyurethanes. For example, USP 3,404,103 discloses a decomposition of PUR by using an aliphatic amine and an alkali metal oxide or hydroxide or an alkaline earth metal oxide or hydroxide as a catalyst. USP 3,708,440 discloses a conversion of scrap polyisocyanurate foam into a polyol by heating the scrap at about 175°C to about 250°C in the presence of a mixture of an aliphatic diol having 2-6 carbon atoms and a dialkanolamine having 4-8 carbon atoms. USP 4,110,266 discloses a process of decomposing PUR into polyols by reacting PUR with ammonia or an amine and reacting the resulting decomposition product containing a mixture of polyols, urea and amine, with an alkylene oxide at an elevated temperature of about 120 - 140°C in an autoclave to convert such the amine to polyols.

Further, USP 4,148,908 discloses carboxylate catalysts for the preparation of PUR from amine and alkylene oxide. The catalysts can be prepared by reacting tertiary amine, an alkylene oxide and a carboxylic acid.

USP 5,556,889 discloses a preparation of recycled polyols by reacting PUR with short-chain hydroxyl-containing compounds, which comprises adding at least one epoxidized native fatty oil to the reaction mixture after the reaction.

### SUMMARY OF THE INVENTION

The present invention provides a process for recycling polyurethane foams to give recycled polyols.

The present invention provides a process for preparation of polyurethane foams using the recycled polyols.

The present invention provides catalysts for use in the glycolysis of polyurethane foams.

The present invention provides a process for preparing recycled polyols, which comprises following steps of:
(1) pulverizing polyurethane foam wastes to give a polyurethane foam scrap;
(2) introducing a mixture of 100 parts by weight of said scrap, 15 - 100 parts by weight of glycol and 0.01 - 10 parts by weight of a catalyst into a reaction vessel equipped with a cooling means; and
(3) allowing the mixture to react under nitrogen atmosphere at a temperature of 120 - 300 °C for 0.5 - 15 hours to give recycled polyol,
wherein said catalyst is one selected from a group consisting of Lewis acids such as zinc chloride, fenic chloride, aluminum chloride or mercury chloride; carboxylic acids such as acetic, formic, propionic, butyric or benzoic acid; inorganic acetates such as magnesium acetate, lead acetate, calcium acetate, potassium acetate, zinc acetate, sodium acetate or phosphorous acetate; and alkaline metal salts such as sodium carbonate, sodium bicarbonate, calcium hydroxide, potassium hydroxide or sodium hydroxide.

The present invention further provides a process for preparing a polyurethane foam from a recycled polyol, which comprises following steps of:
(1) pulverizing polyurethane foam wastes to give a polyurethane foam scrap;
(2) introducing a mixture of 100 parts by weight of said scrap, 15 - 100 parts by weight of glycol and 0.01 - 10 parts by weight of a catalyst into a reaction vessel equipped with a cooling means;
(3) allowing the mixture to react under nitrogen atmosphere at a temperature of 120 - 300 °C for 0.5 - 15 hours to give recycled polyols;
(4) treating said recycled polyols to remove solid impurities therefrom;
(5) mixing said recycled polyols obtained in step (4) with a virgin polyol in such a manner that an amount of the recycled polyols is between 10 % by weight and 30 % by weight based on total amount of resulting mixed polyols; and
(6) reacting the mixed polyols with diisocyanates to give a polyurethane foam,
wherein said catalyst is one selected from a group consisting of Lewis acids such as zinc chloride, ferric chloride, aluminum chloride or mercury chloride; carboxylic acids such as acetic, formic, propionic, butyric or benzoic acid; inorganic acetates such as magnesium acetate, lead acetate, calcium acetate, potassium acetate, zinc acetate, sodium acetate or phosphorous acetate; and alkaline metal salts such as sodium carbonate, sodium bicarbonate, calcium hydroxide, potassium hydroxide or sodium hydroxide.

### BRIEF DESCRIPTION OF THE DRAWINGS

These and various other features and advantages of the present invention will be readily understood with reference to the following detailed description taken in conjunction with the accompanying drawings in which:

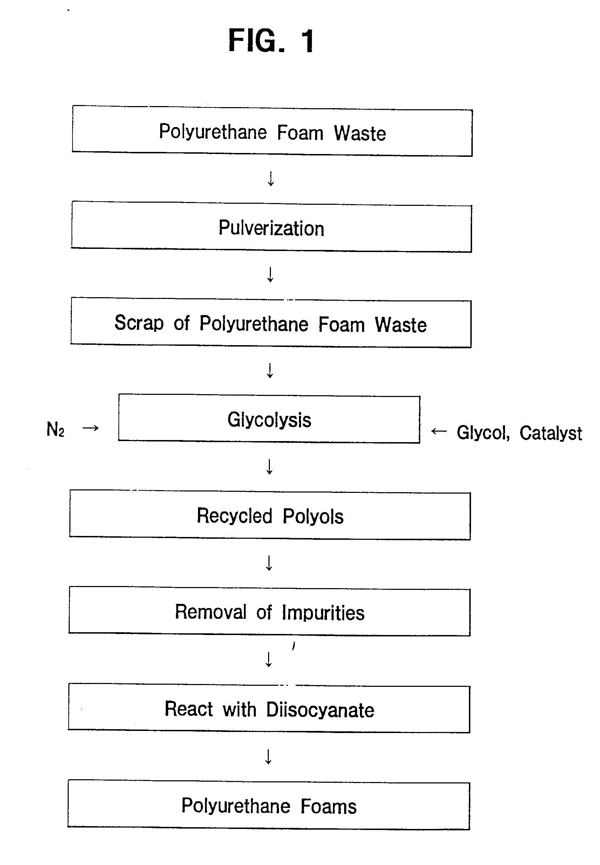

FIG. 1 is a flow chart depicting the process of manufacturing polyurethane foams from recycled glycols according to the present invention;
FIG. 2 is a graph showing initial thermal conductivity of polyurethane foams depending on the amount of recycled polyols;
FIG. 3 is a graph showing initial thermal conductivity of polyurethane foams with the lapse of time;
FIG. 4 and FIG. 5 are graphs showing dimensional stability of polyurethane foams depending on the amount of recycled polyols at temperatures of 70°C and -20°C, respectively; and
FIG. 6(A) through FIG. 6(D) are scanning electronic microscope (SEM) photographs showing cell structures of the polyurethane foams manufactured according to the present invention.

### DETAILED DESCRIPTION OF THE INVENTION

The present invention will now be described in more detail hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

For the present invention, a PUR waste is pulverized to give a PUR scrap and subjected to glycolysis to produce a recycled polyol. The kind and source of PUR waste are not particularly limited. However, for example, a PUR waste from refrigerating apparatus wastes may be used.

The PUR scrap can be obtained by pulverizing PUR waste in a common method using a ball mill or cutter. The PUR scrap has an average diameter of about 300 micrometers or less, or preferably about 80 micrometers or less.

The glycolysis of PUR scrap may be performed by using a glycol. As glycol, which can be used for this purpose, there may be exemplified divalent glycols such as ethylene glycol (EG), diethylene glycol (DEG), 1,2-propane diol, 1,3-propane diol, dipropylene glycol (DPG), 1,4-butane diol, 1,3-butane diol, 1,2-butane diol, neopentyl glycol, 1,5-pentane diol, hexylene glycol, bisphenol A, 2,2-di (4-hydroxypropoxyphenyl) propane or 2,2-di (4-hydroxyethoxyphenyl) propane, and trivalent glycols such as glycerine, trihydroxy methyl propane, trimethylol ethane or pentaerythritol. Among them, ethylene glycol, propylene glycol and diethylene glycol are preferably used.

The catalyst used for the glycolysis according to the present invention may include Lewis acids such as zinc chloride, ferric chloride, aluminum chloride or mercury chloride; carboxylic acids such as acetic, formic, propionic, butyric or benzoic acid; inorganic acetates such as magnesium acetate, lead acetate, calcium acetate, potassium acetate, zinc acetate, sodium acetate or phosphorous acetate; and alkaline metal salts such as sodium carbonate, sodium bicarbonate, calcium hydroxide, potassium hydroxide or sodium hydroxide. The catalyst can be used in single or as mixtures thereof. Among them, sodium hydroxide, potassium hydroxide, sodium acetate, lead acetate, phosphorous acetate and zinc acetate are preferably used, and sodium hydroxide, potassium hydroxide and sodium acetate are more preferably used. Sodium hydroxide is most preferably used.

The amount of glycol used for the glycolysis of PUR scrap is in a range between about 15 parts by weight and about 100 parts by weight based on 100 parts by weight of PUR scrap. The amount of catalyst used for the glycolysis of PUR scrap is in a range between about 0.01 parts by weight and about 10 parts by weight based on 100 parts by weight of PUR scrap.

The reaction mixture of PUR scrap, glycols and catalyst is introduced into a reaction vessel equipped with a cooling means and allowed to react at a temperature between about 120°C and about 300°C, preferably between about 160°C and about 240°C for 0.5 to 15 hours under nitrogen atmosphere to produce recycled polyols. The reaction time of glycolysis may vary depending on the size of PUR scrap, the weight ratio of PUR to glycol, the type of catalyst, and the like.

The best result is obtained when the glycolysis is carried out using PUR scrap having a size of about 80 micrometers or less, ethylene glycol as a glycol, the weight ratio 6:4 of PUR : ethylene glycol and sodium hydroxide as a catalyst. For this case, the glycolysis is completed after 1.5 hours reaction.

The glycolysis product, i.e, the recycled polyols may contain solid impurities, which will block nozzles of foam generator used for producing PUR foams by reaction of recycled polyols and diisocyanates. To avoid this problem, the solid impurities should be removed by, for example placing a filter having a pore size of about 50 to 250 mesh below the reaction vessel and passing reaction mixture through the filter after the completion of reaction.

The glycolysis of PUR scrap may produce various polyols, for example following (1) through (4):

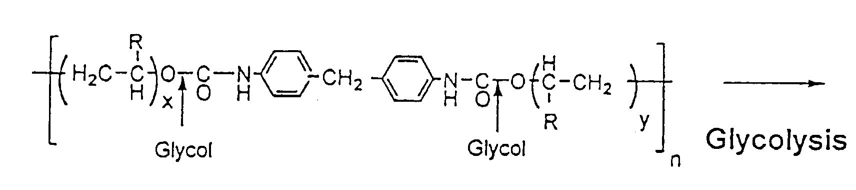

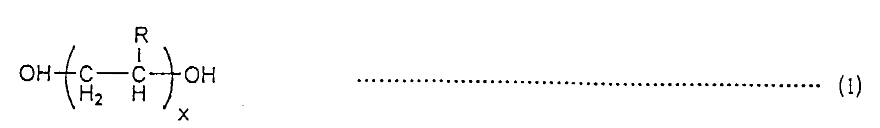

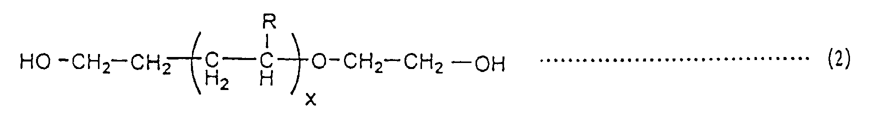

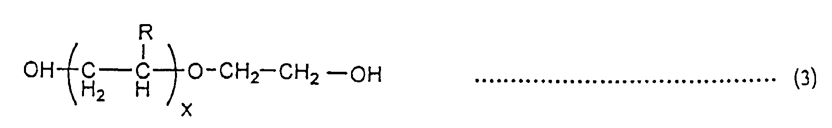

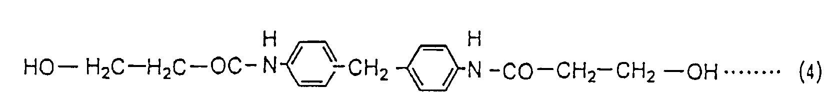

The amount or ratio of polyols (1) to (4) depend on the kind of glycol, reaction temperature and/or reaction time of the glycolysis. The ratio between polyols (1) to (4) are not significant, but the purified recycled polyols should have hydroxy value (OH value) in the range described hereinafter.

When measured in accordance with ASTM D2849, the properties of recycled polyols are as follows: Hydroxy (OH) value of about 250 to about 1,000; acid value of about 0.6 to about 3.5; water content of about 0.1 to 0.7. Therefore, the recycled polyols can be used for manufacturing rigid polyurethane foams. In particular, the recycled polyols have hydroxy value of about 360 to about 800; acid value of about 1.3 to about 2.5; and water content of about 0.2 to 0.5.

According to one important aspect of the present invention, the recycled polyols should be mixed with a virgin polyol to produce PUR foam. The amount of recycled polyols is in a range between about 5 % by weight and 50 % by weight, preferably between about 10 % by weight and 30 % by weight, and more preferably between about 10 % by weight and 25 % by weight based on the total amount of the mixture of recycled polyols and virgin polyol in view of properties of PUR foam produced therefrom and of economic benefits. When the amount of recycled polyols exceeds 50% by weight, the subsequent reaction with diisocyanate, in particular diisocyanate will progress too fast so that PUR foam is nor formed.

The virgin polyols, which can be used for the present invention, are not particularly limited and may be selected from those of commercially available, for example CP-1106™ (Korea Polyol).

The PUR foam obtained by the method using the mixture of recycled polyols and virgin polyols according to the present invention shows improved physical properties such as improved thermal insulation property compared with those of PUR obtained from virgin polyols only .

The physical properties of PUR are measured according to the following methods:

Overall and core densities are measured according to ASTM D1622. Vertical and horizontal compression strengthens are measured according to ASTM D2126. Dimensional stability is measured at a temperature of 70°C or -20°C and relative humidity of 95% for 24 hours.

Post expansion is related to productivity of production of refrigerating apparatus from PUR and is a factor determining the demold time. Post expansion is measured as follows: raw materials are introduced into a mold (30 x 40 x 5 cm) at over packing of 120% and molding process is performed to produce a molded PUR article. After four minutes, the molded PUR article is removed and its dimension is compared with the dimension of the mold. The larger dimension the molded PUR article has, the longer mold time is required. When the mold time is not sufficiently long, the part of PUR is swollen or even there is formed a crack therein.

Thermal conductivity is measured at an average temperature of 23.8°C by using a Model HC-073™ manufactured by EKO Instruments Trading Co., Ltd.

The preparation process of PUR foam by the reaction of polyol mixture and diisocyanate requires a foaming agent. As a foaming agent, those conventionally used in the art can be employed without any particular limitation, and may be exemplified by chlorofluorocarbon (CFC) or cyclopentane, but not limited thereto. Considering the fact that it has been recommended not to use CFC, which is an air-pollution material, cyclopentane may be advantageously used as a foaming agent.

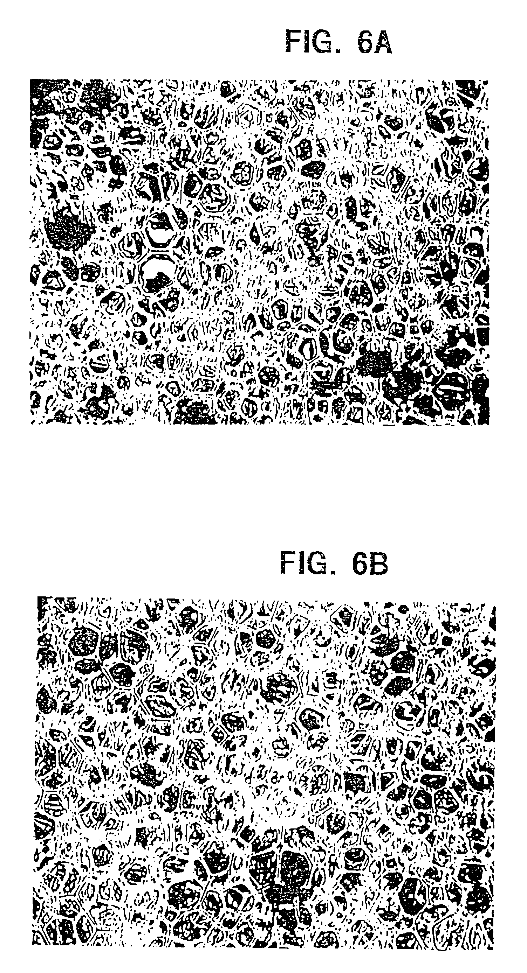

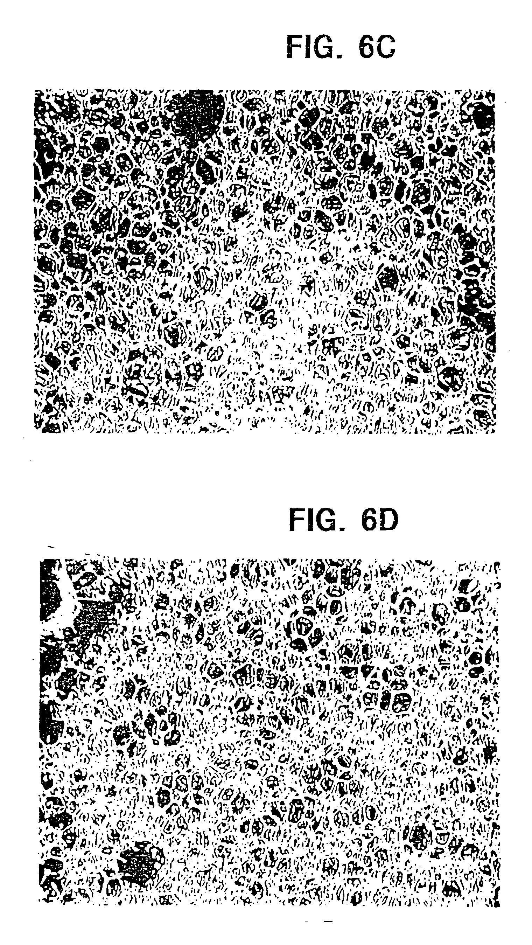

The recycled polyols obtained according to the present invention are mixed with a virgin polyol in such a manner that an amount of the recycled polyols is between 10 % by weight and 30 % by weight based on total amount of resulting mixed polyols. The PUR obtained by the reaction of the polyol mixture and diisocyanate shows an increase in thermal insulation property by about 8% to 13% when compared to those obtained from virgin polyols. The reason why the thermal insulation property of the PUR obtained according to the present invention can be explained as follows: The polyol represented by the general formula (4) in the above has a structure similar to that of diisocyanate, contributing the increase in compatibility with diisocyanate. Consequently, the recycled polyol mixture containing the polyol (4) can be mixed very well with diisocyanate and renders the resulting PUR have more fine cell structure than PUR made from virgin polyols only, as can be seen from FIG. 6. FIG. 6(A) through FIG. 6(D) are scanning electronic microscope (SEM) photographs depicting the cell structure of PUR. If the PUR has a more fine cell structure, it can show improved thermal insulation property.

For the preparation process of PUR from the reaction of the polyol mixture and diisocyanate, the ratio of the polyol mixture to diisocyanate is determined depending on the hardness of PUR and may be expressed as NCO index or reaction index which is an equivalency ratio between NCO equivalency of diisocyanate and OH equivalency of polyol. For example, in Table 1 below, if the reaction index is indicated by numerical number 112, an excessive amount of diisocyanate is added so that the NCO equivalency thereof is larger by 12% than the OH equivalency of polyol. The reaction index can be determined by those of ordinary skill in the art without difficulty depending on the hardness of PUR to be obtained as described above.

The present invention will be described in more detail by way of various Examples, which should not be construed as limiting the scope of the invention.

### Example 1

PUR waste from refrigeration apparatus is powdered with a cutter to obtain PUR scrap having an average diameter of about 80 micrometer. Ethylene glycol 40g, polyurethane scrap 5g and sodium hydroxide 0.6g were introduced into a reactor equipped with a cooling means, and the temperature of the mixture was increased to about 200°C while purging with nitrogen gas. Then 55g of PUR scrap having an average diameter of about 80 micrometer was introduced gradually into the flask to perform glycolysis of polyurethane.

Since PUR scrap has a low density of about 0.4 g/cm³, it is very bulky as four times as the volume of ethylene glycol. Therefore, it may be sometime difficult to introduce whole PUR scrap at once into a small reactor. For this case, a small aliquot of PUR scrap is introduced together with the whole ethylene glycol, and after the PUR scrap in the reactor is completely decomposed, the remaining PUR scrap is gradually introduced into the reactor.

The glycolysis was completed after about 1.5 hours. The time of glycolysis can be shortened by reducing the time of introducing PUR scrap into the reactor or by reducing the average diameter of PUR scrap.

The obtained recycled polyols have a hydroxy (OH) value of 510 mg KOH/g.

### Example 2

By following the procedure in Example 1 except that potassium acetate was used instead of sodium hydroxide, about 60g of PUR scrap was decomposed to obtain recycled polyols. It took about 3.5 hours. The obtained recycled polyols have a hydroxy (OH) value of 512 mg KOH/g.

### Example 3

By following the procedure in Example 1 except that sodium acetate was used instead of sodium hydroxide, about 60g of PUR scrap was decomposed to obtain recycled polyols. It took about 2.5 hours. The obtained recycled polyols have a hydroxy (OH) value of 514 mg KOH/g.

### Example 4

By following the procedure in Example 1 except that zinc acetate was used instead of sodium hydroxide, about 60g of PUR scrap was decomposed to obtain recycled polyols. It took about 6 hours. The obtained recycled polyols have a hydroxy (OH) value of 505 mg KOH/g.

### Example 5

By following the procedure in Example 1 except that lead acetate was used instead of sodium hydroxide, about 60g of PUR scrap was decomposed to obtain recycled polyols. It took about 3 hours. The obtained recycled polyols have a hydroxy (OH) value of 508 mg KOH/g.

### Example 6

By following the procedure in Example 1 except that potassium hydroxide was used instead of sodium hydroxide, about 60g of PUR scrap was decomposed to obtain recycled polyols. It took about 2.5 hours. The obtained recycled polyols have a hydroxy (OH) value of 513 mg KOH/g.

### Comparative Example 1

By following the procedure in Example 1 except that diethanolamine was used as catalyst instead of sodium hydroxide, the glycolysis was carried out. However, the PUR scrap scarcely decomposed after 10 hour reaction.

### Example 7

PUR scrap having an average diameter of about 80 micrometer (300g), diethylene glycol 100g, p-toluene sulfonate 3.0g and sodium hydroxide 1.0g were introduced into a reactor equipped with a cooling means, and the reactor was purged with nitrogen gas. The temperature of the reaction mixture was increased to about 150°C while stirring the mixture, and the mixture was allowed to react for about 4 hours.

Then the reaction mixture was filtered through 200 mesh screen to remove solid impurities to give recycled polyols. Thus obtained recycled polyols have a hydroxy (OH) value of 542 mg KOH/g.

### Example 8

PUR scrap having an average diameter of about 80 micrometer (320g), ethylene glycol 80g and sodium acetate 4.0g were introduced into a reactor equipped with a cooling means, and the glycolysis was performed at the same conditions as those in Example 7 except the temperature of 190°C.

The obtained recycled polyols have a hydroxy (OH) value of 497 mg KOH/g.

### Example 9

PUR scrap having an average diameter of about 80 micrometer (300g), ethylene glycol 80g and lead acetate 4.0g were introduced into a reactor equipped with a cooling means, and the glycolysis was performed at the same conditions as those in Example 7 except the temperature of 200°C.

The obtained recycled polyols have a hydroxy (OH) value of 475 mg KOH/g.

### Example 10

The polyols obtained in Examples 7 through 10 are named as polyol No. 1, N0. 2, No. 3 and No. 4, respectively, and used to prepare PUR according to the formulations shown in Table 1. In Table 1, the unit of each component is % by weight unless otherwise indicated.

**Table 1**

| Formulation for preparation of PUR | | | | | | | | | | | |
|---|---|---|---|---|---|---|---|---|---|---|---|
| Component | A (Com) | B (Inv) | C (Inv) | D (Inv) | E (Inv) | F (Inv) | G (Inv | H (Inv) | I (Com) | J (Inv) | K (Inv) |
| Polyol 3005* | 100 | 90 | 80 | 70 | 90 | 80 | 90 | 80 | 60 | 80 | 70 |
| Polyol 1 (Ex.7) | 0 | 10 | 20 | 30 | 0 | 0 | 0 | 0 | 0 | 0 | 0 |
| Polyol 2 (Ex. 8) | 0 | 0 | 0 | 0 | 10 | 20 | 0 | 10 | 0 | 0 | 0 |
| Polyol 3 (Ex. 9) | 0 | 0 | 0 | 0 | 0 | 0 | 10 | 10 | 40 | 0 | 0 |
| Polyol 4 (Ex. 9) | 0 | 0 | 0 | 0 | 0 | 0 | 0 | 0 | 0 | 20 | 30 |
| Catalyst** | 2.4 | 2.4 | 2.4 | 2.4 | 2.4 | 2.4 | 2.4 | 2.4 | 2.4 | 2.4 | 2.4 |
| Surfactant*** | 2.0 | 2.0 | 2.0 | 2.0 | 2.0 | 2.0 | 2.0 | 2.0 | 2.0 | 2.0 | 2.0 |
| H₂O | 2.0 | 2.0 | 2.0 | 2.0 | 2.0 | 2.0 | 2.0 | 2.0 | 2.0 | 2.0 | 2.0 |
| Cyclopentane | 13.5 | 13.5 | 13.5 | 13.5 | 13.5 | 13.5 | 13.5 | 13.5 | 13.5 | 13.5 | 13.5 |
| Mix Ratio (Polyol : isocyanate = 100: ) | 123 | 123 | 125 | 126 | 121 | 125 | 124 | 126 | 127 | 131 | 135 |
| Reaction Index | 112 | 112 | 112 | 112 | 112 | 112 | 112 | 112 | 112 | 112 | 112 |

| | | | | | | | | | | | |
|---|---|---|---|---|---|---|---|---|---|---|---|
| Note. * Polyol 3005 : Hydroxy (OH) value = 120mg KOH/g (Korea Polyol CP-1106™) | | | | | | | | | | | |
| ** Catalyst : Tertiary amine | | | | | | | | | | | |
| *** Surfactant : Polysiloxane Isocyanate : M20S™ manufactured by Hanwha-BASF Urethane Ltd. Com : Comparative Inv : Inventive | | | | | | | | | | | |

### Example 12

In order to examine the compatibility of recycled polyols with diisocyanate, cream time, gel time and free rise density were measured during the reaction of the polyol mixture and isocyanate according to the formulations in Table 1. The results are shown in Table 2.

**Table 2**

| Fomulations | A (Com) | B (Inv) | C (Inv) | D (Inv) | E (Inv) | F (Inv) | G (Inv) | H (Inv) | I (Com) | J (Inv) | K (Inv) |
|---|---|---|---|---|---|---|---|---|---|---|---|
| Cream time (sec.) | 11 | 9 | 9 | 8 | 8 | 7 | 8 | 7 | ND | 9 | 7 |
| Gel time (sec.) | 58 | 57 | 50 | 40 | 45 | 40 | 47 | 29 | ND | 36 | 30 |
| Free rise density (g/l) | 30.2 | 30.2 | 31.2 | 33.7 | 30.4 | 31.6 | 30.2 | 31.0 | ND | 31.7 | 36.3 |
| Note: 'ND' indicates the reaction proceeds too fast to measure the values, or the PUR is not formed. | | | | | | | | | | | |

The cream time, gel time and free rise density are indices indicating reactivity of polyols and diisocyanate for the preparation of PUR. The shorter the cream time and gel time, the reaction proceeds faster. If the reaction proceeds too fast, the gelation occurs rapidly so that the surface of PUR hardens too early. This results in a decrease in free rise density and final density of the PUR.

Cream time means a time required for the color of the reaction mixture changes to cream color when PUR is formed, and gel time means a time required the surface of PUR hardens to form a gel.

The results in Table 2 suggests that the amount of recycled polyols in the polyol mixture is important. Thus, when the amount of recycled polyols exceeds 30% by weight, the reaction proceeds too fast to form PUR. On the other hand, when the amount of recycled polyols is less than 10% by weight, the use of recycled polyols has no significant economic benefit.

### Example 13

By using the formulation A in Table 1 except that the amount of recycled polyol (Polyol A) is changed to 0%, 10, 20 or 30% by weight, PUR is prepared. Thermal conductivity was measured for the produced PUR in accordance with ASTM C 177.

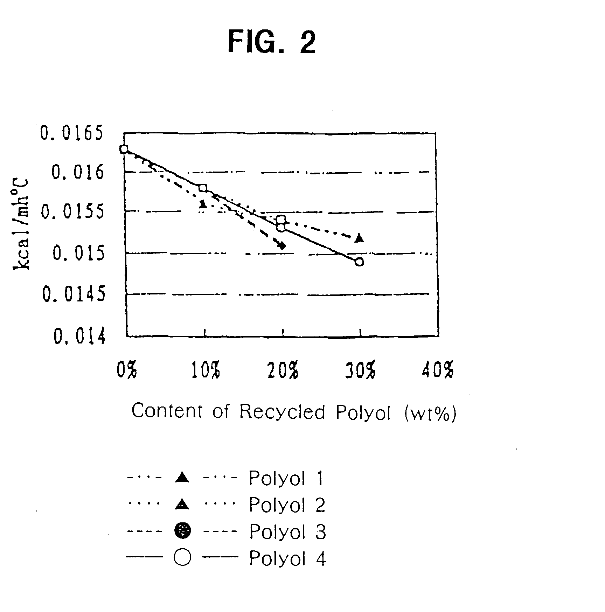

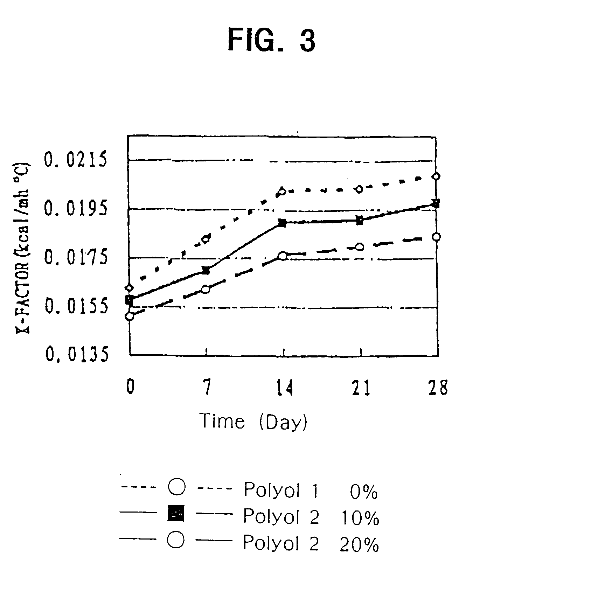

Initial thermal conductivity and thermal conductivity after aging were depicted in FIG. 2 and FIG. 3, respectively. As can be seen in FIG. 2, for all the recycled polyols 1 through 4, the thermal conductivity of PUR decreases in proportion to the amount of the recycled polyol in the polyol mixture, indicating that the thermal insulation of PUR increases proportionally to the amount of recycled polyol. The thermal insulation of PUR made from the polyol mixture containing 30% by weight of recycled polyol is improved by about 10% compared with PUR made from the virgin polyol only, i.e, 0% of recycled polyol.

In general, PUR shows an improved thermal insulation property when it is aged. As can be seen from FIG. 3, the PURs made from the formulations containing the recyclate polyols (- ■ - and - ○ - ) exhibited a constant lower thermal conductivity K regardless of aging time than that of PUR made from virgin polyol only ( ··· ○ ··· ). And, the PUR made from the formulation containing 10% by weight of recyclate polyol 2 (- ■ - ) shows a lower thermal insulation than that made from the formualtion containing 20% by weight (- ○ -). These results indicate that the thermal insulation increases in proportion to the content of the recycled polyol. The difference is increased in a time-dependent manner, and in particular, after 14 day aging, the thermal insulation property of PUR ( - ○ - ) increased by about 13% compared with the PUR made from virgin polyol only (··· ○ ···).

### Example 14

The polyurethane foam generally undergoes a change in its shape and its dimensional stability with regard to the lapse of time is one of important property. Therefore, dimensional stability at -20°C and 70°C was measured in accordance with ASTM D 794 and ASTM D 2126.

Thus, PURs were prepared by usng formulation K in Example 11 containing recyclate polyol 3 (Ex. 9) or 4 (Ex. 10) and their dimensional stability was measured at a temperature of 70°C and a relative humidity of 95% for 24 hours (High temperature dimensional stability), and at a temperature of -20°C for 24 hours (Low temperature dimensional stability).

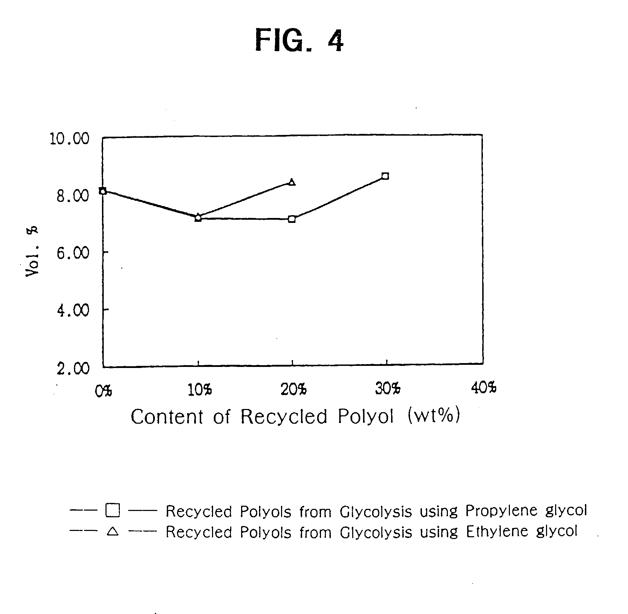

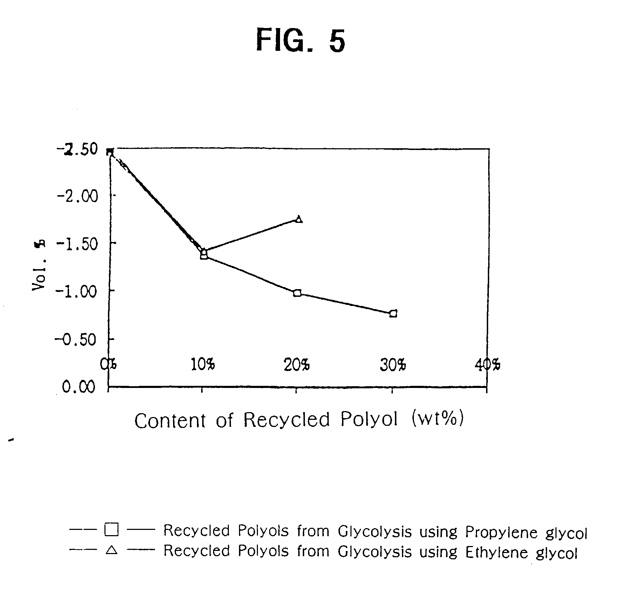

The results are shown in FIG. 4 and FIG. 5, respectively. As can be seen in FIG. 4 and FIG. 5, the PUR manufactured according to the present invention shows a slight improvement in the high temperature dimensional stability when compared with PUR made from virgin polyol only. However, the former shows a significant improvement for its low temperature dimensional stability. This indicates that the PUR prepared according to the present invention is very advantageously used for manufacturing appliances used at low temperture environment, for example refrigeration or freezing apparatuses .

### Example 15

The cell structure of the polyurethane foams prepared from the formulations A (0% recyclate polyol; comparative), B (10% recyclate polyol; inventive), C (20% recyclate polyol; inventive) or D (30% recyclate polyol; inventive) in Table 1 were observed by taking their SEM photographs ( X 20). The results are shown in FIG. 6(A) through FIG. 6(D), respectively. These results show that the polyurethane foams prepared according to the present invention have a more fine cell structure (FIGs. 6(B), 6(C) and 6(D)) than those prepared from virgin polyol only (FIG. 6(A)).

As described in the above, the present invention provides an efficient recycling of polyurethane foam wastes and its use. Thus, the present invention renders an efficient recycling of polyurethane foam wastes to give recyclate polyols as well as a preparation of polyurethane foam having good thermal insulation property and improved dimensional stability.

Although preferred embodiments of the present invention have been described in detail hereinabove, it should be clearly understood that many variations and/or modifications of the basic inventive concepts herein taught which may appear to those skilled in the art will still fall within the spirit and scope of the present invention as defined in the appended claims.

## Claims

1. A process for preparing recycled polyols, which comprises following steps of:
(1) pulverizing polyurethane foam wastes to give a polyurethane foam scrap;
(2) introducing a mixture of 100 parts by weight of said scrap, 15 - 100 parts by weight of glycol and 0.01 - 10 parts by weight of a catalyst into a reaction vessel equipped with a cooling means; and
(3) allowing the mixture to react under nitrogen atmosphere at a temperature of 120 - 300 °C for 0.5 - 15 hours to give recycled polyol,
wherein said catalyst is one selected from a group consisting of Lewis acids such as zinc chloride, ferric chloride, aluminum chloride or mercury chloride; carboxylic acids such as acetic, formic, propionic, butyric or benzoic acid; inorganic acetates such as magnesium acetate, lead acetate, calcium acetate, potassium acetate, zinc acetate, sodium acetate or phosphorous acetate; and alkaline metal salts such as sodium carbonate, sodium bicarbonate, calcium hydroxide, potassium hydroxide or sodium hydroxide.

2. A process of Claim 1, wherein said catalyst is sodium hydroxide, potassium hydroxide, sodium acetate, lead acetate, phosphorous acetate or zinc acetate.

3. A process of Claim 2, wherein said catalyst is sodium hydroxide.

4. A process of Claim 1, wherein said polyurethane foam scrap has an average diameter of about 80 micrometer or less.

5. A process for preparing a polyurethane foam from a recycled polyol, which comprises following steps of:
(1) pulverizing polyurethane foam wastes to give a polyurethane foam scrap;
(2) introducing a mixture of 100 parts by weight of said scrap, 15 - 100 parts by weight of glycol and 0.01 - 10 parts by weight of a catalyst into a reaction vessel equipped with a cooling means;
(3) allowing the mixture to react under nitrogen atmosphere at a temperature of 120 - 300 °C for 0.5 - 15 hours to give recycled polyols;
(4) treating said recycled polyols to remove solid impurities therefrom;
(5) mixing said recycled polyols obtained in step (4) with a virgin polyol in such a manner that an amount of the recycled polyols is between 10 % by weight and 30 % by weight based on total amount of resulting mixed polyols; and
(6) reacting the mixed polyols with diisocyanates to give a polyurethane foam,
wherein said catalyst is one selected from a group consisting of Lewis acids such as zinc chloride, fenic chloride, aluminum chloride or mercury chloride; carboxylic acids such as acetic, formic, propionic, butyric or benzoic acid; inorganic acetates such as magnesium acetate, lead acetate, calcium acetate, potassium acetate, zinc acetate, sodium acetate or phosphorous acetate; and alkaline metal salts such as sodium carbonate, sodium bicarbonate, calcium hydroxide, potassium hydroxide or sodium hydroxide.

6. A process of Claim 5, wherein said catalyst is sodium hydroxide, potassium hydroxide, sodium acetate, lead acetate, phosphorous acetate or zinc acetate.

7. A process of Claim 6, wherein said catalyst is sodium hydroxide.

8. A process of Claim 7, wherein said polyurethane foam scrap has an average diameter of about 80 micrometer or less.

9. A process of Claim 5, wherein, in the step (5), said recycled polyols are mixed with the virgin polyol in a ratio that the amount of the recycled polyols is between 10 % by weight and 25 % by weight based on total amount of the resulting mixed polyols.

10. A process of Claim 5, wherein said polyurethane foam obtained in the step (6) is a hard polyurethane foam.
